# EUROPEAN PATENT APPLICATION

(11) **EP 4 700 273 A1**
(43) Date of publication of application: **25.02.2026**
(21) Application number: 23933788.4
(22) Date of filing: 03.11.2023
(51) Int. Cl.: F17C 13/00, F17C 13/04, F17C 13/08, F16L 29/00, F16L 41/03, F16L 19/02, F16L 3/10, H01M 8/04082, B60L 50/72

(54) **MEDIUM STORAGE SYSTEM AND VEHICLE**

(30) Priority: 17.04.2023 CN 202310408615
(71) Applicant: Dongfeng Motor Group Co., Ltd., Wuhan, Hubei 430000 (CN)
(72) Inventor: CHEN, Ming, Wuhan, Hubei 430000 (CN); YANG, Jiaxi, Wuhan, Hubei 430000 (CN); LI, Hongtao, Wuhan, Hubei 430000 (CN); WANG, Bo, Wuhan, Hubei 430000 (CN); WANG, Zijian, Wuhan, Hubei 430000 (CN)
(74) Representative: Valet Patent Services Limited
(86) International application number: PCT/CN2023/129506
(87) International publication number: WO 2024/216921

(57) **Abstract**

A medium storage system and a vehicle. A medium storage system comprises a mounting frame (100), storage containers (200), a connector (300), a common rail device (400) and a control valve (500). The mounting frame (100) is provided with a mounting cavity (110). Two or more storage containers (200) are provided, which are sequentially arranged in a direction which is disposed at an angle to an axial direction of the storage container (200), and are disposed in the mounting cavity (110). The connectors (300) are connected to the corresponding storage container (200) and are each connected to the mounting frame (100). The connector (300) is provided with a communication channel. The common rail device (400) is connected to the mounting frame (100) and/or a vehicle, and is disposed at an angle to the axial direction of the storage container (200). The common rail device (400) each is provided with a medium channel (411). Inner cavities of various storage containers (200) are each in communication with the medium channel (411) by the communication channel of a corresponding connector (300).

## Description

### CROSS-REFERENCE TO RELATED APPLICATION

This application claims priority to Chinese patent application No. CN202310408615.7, filed on April 17 2023, the entire contents of which are incorporated herein by reference.

### TECHNICAL FIELD

The invention belongs to the field technology of storage device, and specifically relates to a medium storage system and a vehicle.

### BACKGROUND

New energy vehicles refer to vehicles that use unconventional vehicle fuels as a power source (or use conventional vehicle fuels and adopt new onboard power devices). Vehicles that use unconventional vehicle fuels as the power source are usually vehicles that have advanced technical principles, novel technologies, and novel structures formed in combination with advanced technologies in power control and drive. The currently widely used unconventional vehicle fuel is hydrogen, and the corresponding new energy vehicles are hydrogen fuel cell vehicles and hydrogen internal combustion engine vehicles. In addition, currently used unconventional automotive fuels further include methanol and the like.

The new energy vehicles are provided with a dedicated storage system thereon for storing an energy medium (such as hydrogen, methanol, natural gas, etc.) and for controlling a supply of the energy medium. Taking hydrogen fuel cells as an example, the new energy vehicles are provided with a hydrogen cylinder thereon for storing hydrogen gas. Processes of hydrogen refueling and supply are controlled by a cylinder valve on the hydrogen cylinder. Due to a limitation of hydrogen storage capacity in a single cylinder, a group of multiple gas cylinders is generally used during use. In the existing arrangement of multiple gas cylinders, each gas cylinder is individually matched with a cylinder valve and respective pipeline, causing a storage system with a significantly increased cost, complex pipeline, low space utilization and low integration.

### SUMMARY

To solve the above technical problems, a medium storage system and a vehicle is provided according to an embodiment of the invention to achieve a centralized control of multiple storage containers.

According to a first aspect of the invention, a medium storage system mounted on a vehicle is provided. The medium storage system comprises: a mounting frame configured to connect a vehicle and comprising a mounting cavity; two or more storage containers disposed in the mounting cavity and disposed along a direction that is at an angle to an axial direction of the storage containers in sequence; two or more connectors connected to corresponding storage containers and each connected to the mounting frame, the connector being provided with a communication channel; a common rail device connected to the mounting frame and/or the vehicle, the common rail device being provided with a medium channel, inner cavities of various storage containers being connected to the medium channel by the communication channel of corresponding connector; a control valve communicated onto the common rail device.

According to a second aspect of the invention, a vehicle is provided, comprising: a vehicle body; a power system configured to perform work using a medium to provide a driving force for a movement of the vehicle body; and the medium storage system according to the first aspect of the invention, which is in communication with the power system to provide the medium.

### BRIEF DESCRIPTION OF DRAWINGS

In order to more clearly illustrate the technical solutions in the embodiments of the invention, the following briefly introduces the drawings required for describing the embodiments. Obviously, the drawings in the following description only illustrate some embodiments of the invention, and for those skilled in the art, other drawings can also be obtained based on these drawings without creative efforts.
FIG. 1 is a schematic structural diagram of a medium storage system according to some embodiments of the invention.
FIG. 2 is a schematic structural diagram of a connector in the medium storage system of FIG. 1.
FIG. 3 is a schematic structural diagram of a common rail device in the medium storage system of FIG. 1.
FIG. 4 is a schematic structural diagram of a clamp in the medium storage system of FIG. 1.
FIG. 5 is a schematic structural diagram of a mounting frame in the medium storage system of FIG. 1.
FIG. 6 is an installation structural diagram of a tail valve in the medium storage system of FIG. 1.
FIG. 7 is a connection structural diagram of a connector, a storage container, and a common rail device in the medium storage system of FIG. 1.
FIG. 8 is a schematic structural diagram of a control valve in the medium storage system of FIG. 1.
FIG. 9 is a medium circulation circuit diagram of the medium storage system in FIG. 1.
FIG. 10 is a hydrogen circulation circuit diagram of a medium storage system in a hydrogen refueling state according to some embodiments of the invention.
FIG. 11 is a hydrogen circulation circuit diagram of a medium storage system in a hydrogen supply state according to some embodiments of the invention.
FIG. 12 is a schematic structural diagram of a medium storage system according to other embodiments of the invention;
FIG. 13 is a sectional view of a common rail device in a medium storage system according to other embodiments of the invention.

In the drawings, corresponding relationships between reference signs and component names are as follows: 100, mounting frame; 110, mounting cavity; 120, crossbeam; 121, protrusion portion; 130, longitudinal beam; 140, bracket; 150, mounting bracket; 200, storage container; 210, tail valve; 220, throat pipe; 300, connector; 310, first column segment; 320, second column segment; 330, connecting segment; 331, mating slope; 340, nut; 351, first channel; 352, second channel; 353, first bypass channel; 354, communication position; 370, shut-off valve; 380, overflow valve; 390, first bypass valve; 400, common rail device; 410, rail; 411, medium channel; 412, mating hole; 420, threaded joint; 430, plug; 500, control valve; 510, switch valve; 520, second bypass valve; 530, one-way valve; 600, fixing device; 700, clamp; 710, half-ring; 720, rubber ring.

### DETAILED DESCRIPTION

The technical solutions in the embodiments of the invention will be clearly and completely described below in conjunction with the drawings in the embodiments of the invention. Obviously, the described embodiments are only a portion of the embodiments, rather than all the embodiments of the invention. Based on the embodiments in the invention, all other embodiments obtained by those skilled in the art without making any creative work shall fall within the scope of protection of the invention.

Furthermore, the invention may repeat reference numerals and/or reference letters in different examples. Such repetition is for the purpose of simplicity and clarity and does not in itself indicate a relationship between the various embodiments and/or disposing discussed. Furthermore, the invention provides examples of various specific processes and materials, but those skilled in the art may recognize the application of other processes and/or the use of other materials.

In related art, a plurality of hydrogen cylinders may be provided. Each hydrogen cylinder is individually matched with a cylinder valve. A controller independently controls each cylinder valve. Therefore, a technical problem of low integration resulting in insufficient installation space on the vehicle exists. A medium storage system and a vehicle are provided according to an embodiment of the invention, to be capable of at least partially solving technical problems of insufficient space and low integration.

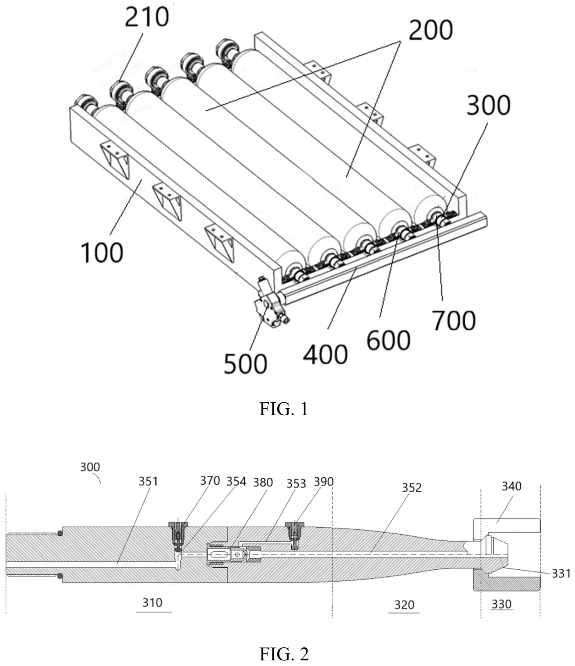

According to a first aspect of the invention, a medium storage system installed on a vehicle is provided. FIG. 1 is a schematic structural diagram of a medium storage system according to some embodiments of the invention. As shown in FIG. 1, the medium storage system comprises a mounting frame 100, a storage container 200, a connector 300, a common rail device 400, and a control valve 500. The mounting frame 100 is configured to connect a vehicle and comprises a mounting cavity 110. Two or more storage containers 200 are provided, and are sequentially arranged in a direction which is disposed at an angle to an axial direction of the storage container 200, and disposed in the mounting cavity 110. Two or more connectors 300 are provided. Two or more connectors 300 are connected to corresponding storage containers 200 and each connected to the mounting frame 100. The connector 300 is provided with a communication channel. The common rail device 400 is connected to the mounting frame 100 and/or the vehicle, and is provided with a medium channel 411. An inner cavity of various storage containers 200 is in communication with the medium channel 411 through the communication channel of corresponding connector 300. The control valve 500 is in communication with the common rail device 400.

The medium storage system is a vehicle-mounted storage system, and as a whole comprises a mounting frame 100, a storage container 200, a connector 300, a common rail device 400, and a control valve 500. The mounting frame 100 is used to connect the vehicles. A plurality of storage containers 200 are all located in a mounting cavity 110 of the mounting frame 100 and sequentially arranged along a direction at an angle to an axial direction of the storage container 200, and thus the vehicle-mounted storage system is formed as an independent module. Each storage container 200 is provided with a connector 300 thereon. The connector 300 simultaneously serves functions of allowing a medium to enter and exit the storage container 200, as well as an installation of the storage container 200. Various storage containers 200 each are in communication with the common rail device 400. The medium is filled into various storage containers 200 via the common rail device 400. The medium in various storage containers 200, when in use, flows into the common rail device 400. The control valve 500 is in communication with the common rail device 400 to uniformly control a circulation condition of the medium in various storage containers 200.

In some embodiments, the connector 300 may be a variable diameter cylinder. As shown in FIG. 2 is a schematic structural diagram of a connector in the medium storage system of FIG. 1. As shown in FIG. 2, the variable diameter cylinder may include a first column segment 310, a second column segment 320, and a connecting segment 330 that are connected along a direction from the storage container 200 to the common rail device 400 in sequence. The first column segment 310 is connected to a corresponding storage container 200. The connecting segment 330 is connected to the common rail device 400. A cross-sectional area of the second column segment 320 is smaller than that of the first column segment 310, and the first column segment 310 has a larger cross-sectional area. The first column segment 310 can be used to install structural members such as valves, and can also be used to connect the mounting frame 100. When the first column segment 310 serves as a connection position with the mounting frame 100, a support stability is good. The cross-sectional area of the second column segment 320 is small, to make the second column segment 320 to have a certain deformation ability. A fracture problem will not occur, as the connector 300 is in a suspended state before the common rail device 400 is installed to the connector 300. In some embodiments, a cross-sectional area of the second column segment 320 decreases sequentially along a direction from the first column segment 310 to the common rail device 400. The second column segment 320 with this shape is less prone to brittle fracture problem caused by stress concentration. In other embodiments, the second column segment 320 may also be a straight column segment with a constant cross-sectional area, and thus the connector 300 has a stepped shaft structure for easy processing. A shape of the second column segment 320 is not specifically limited in the invention.

In some embodiments, the first column segment 310 of the connector 300 is used for installing components, such as valves, etc. Therefore, the first column segment 310 is a split structure that facilitates an installation of components, such as valves, etc. In order to simplify a structure of the connector 300 and improve an integration of the connector 300, in some embodiments, a portion of the first column segment 310 is integrally formed with the second column segment 320 and the connecting segment 330. A material of connector 300 may be non-metallic (such as plastic) or metallic (such as aluminum alloy and stainless steel, etc.), and the invention does not limit this.

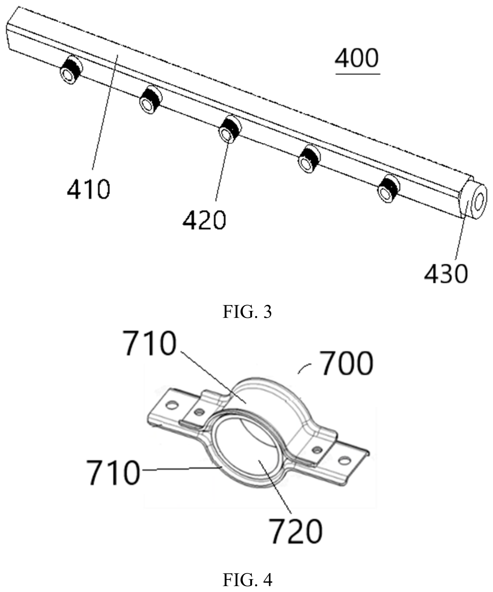

In some embodiments, as shown in FIG. 3, the connector 300 may further comprise a nut 340 that is movably sleeved on the connecting segment 330. As shown in FIG. 3, the common rail device 400 may comprise a rail 410 provided with a medium channel 411, and two or more threaded joints 420 connected to the rail 410. The threaded joints 420 is provided with external threads. The number of threaded joints 420 is the same as that of the storage container 200. The nut 340 is connected to a corresponding threaded joint 420. The connecting channel of the connector 300 is, through the nut 340, in communication with the medium channel 411 inside the rail 410, to achieve a circulation of medium between the connector 300 and the rail 410. With the nut 340 disposed, a detachable connection between the connector 300 and the rail 410 can be realized for easy maintenance.

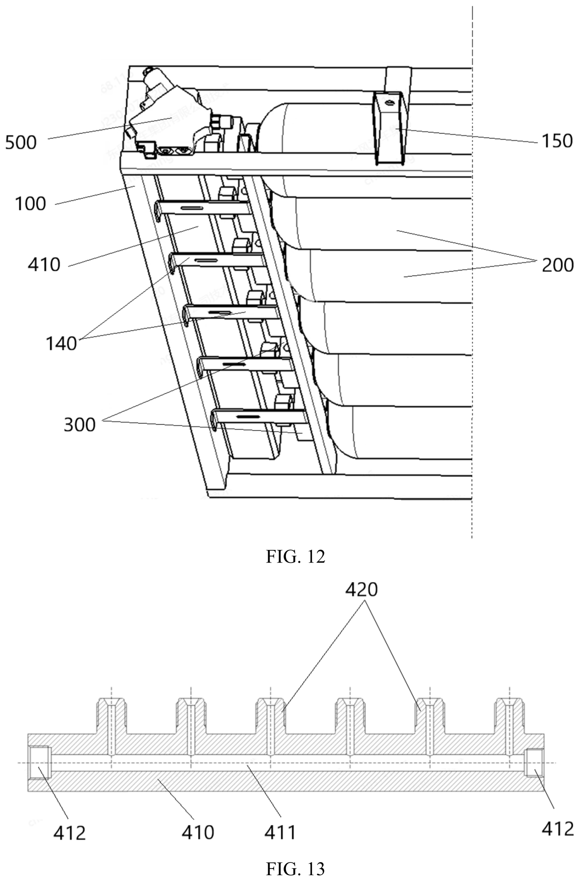

FIG. 13 is a sectional view of a common rail device in a medium storage system according to other embodiments of the invention. As shown in FIGs. 3 and 13, in some embodiments, the control valve 500 is disposed on the common rail device 400. An end of the common rail device 400 is provided with a mating hole 412 to facilitate an installation of the control valve 500. In some embodiments, the mating hole 412 is a threaded hole. The common rail device 400 is threadedly connected to the control valve 500. The control valve 500 may be selected to be disposed inside or outside the mounting cavity 110. In some embodiments, the control valve 500 is located outside the mounting cavity 110 and is in communication with the common rail device 400 through a pipe, and thus pipe joints may be correspondingly disposed on the common rail device 400.

Considering a functional expansion of the common rail device 400, as shown in FIGs. 3 and 13, in some embodiments, another end of the common rail device 400 is also provided with a mating hole 412 for installing components, such as sensors and valves etc. When no additional components are required, a plug 430 is sealed in the mating hole 412 to seal the mating hole 412 at another end.

The rail 410 and the threaded joint 420 may be split structures. In other embodiments, in order to improve a sealing performance at a connection between the rail 410 and the threaded joint 420, the rail 410 and the threaded joint 420 may be an integrated structure. The rail 410 may be rod-shaped. The threaded joints 420 are at an interval sequentially connected to the rail 410 along an axial direction of the rail 410. An end of the rail 410 is closed, and another end of the rail 410 is in communication with control valve 500. In this way, a path of the medium channel 411 in the rail 410 is short, to be capable of reducing a pressure drop of the medium in the medium channel 411.

In some embodiments, an end of the connecting segment 330 away from the common rail device 400 is provided with a first action slope. A second action slope that cooperates with the first action slope is provided inside the nut 340. When the first action slope and the second action slope act, the nut 340 is limited to be axially separated from the connecting segment 330. The first action slope may be a circumference surface of circular cone, and the second action slope is also a circumference surface of circular cone. With a slope disposed, a fracture problem caused by stress concentration of the nut 340 and the second column segment 320 can be avoided to a certain extent. In other embodiments, interaction surfaces between the connecting segment 330 and the nut 340 may also be action surfaces vertical to an axial direction of the connecting segment 330, which is not specifically limited in the invention.

In some embodiments, as shown in FIG. 2, an end of the connecting segment 330 close to the common rail device 400 is provided with a mating slope 331. The connecting segment 330 is partially extended into the threaded joint 420. After the connector 300 is connected to the rail 410 by the nut 340, as the nut 340 is rotated around the threaded joint 420, the nut 340 and the threaded joint 420 are tightened to each other to produce a relative motion in an axial direction, and the mating slope 331 of the connecting segment 330 can be gradually pressed tightly with an end surface of the threaded joint 420 to form a good seal. In some embodiments, the mating slope 331 may be a conical surface or a circumferential surface of a truncated cone.

In some embodiments, generally speaking, a medium stored in the storage container 200 is a high-pressure medium. The storage container 200 is mostly a structure of revolution body. The connector 300 is coaxially disposed at an end along an axial direction of the storage container 200. Therefore, the storage container 200 can be ensured to be evenly stressed and installed more stably.

In some embodiments, as shown in FIG. 1, the medium storage system may further comprise two or more clamps 700 connected to the mounting frame 100. The clamp 700 is sleeved on a first column segment 310 of a corresponding connector 300. The connector 300 may be connected to the mounting frame 100 by the clamp 700 to fix the storage container 200. In a way of fixing the storage container 200 by the connector 300, a volume change of the storage container 200 caused due to thermal expansion and contraction is not limited. In other embodiments, the connector 300 may also be directly connected to a mounting frame 100, for example, a first column segment 310 of the connector 300 is connected to the mounting frame 100. In some embodiments, as shown in FIG. 4, the clamp 700 comprises two half-rings 710. The two half-rings 710 are arranged opposite to each other. The two half-rings 710 are enclosed outside the first column segment 310. The two half-rings 710 are connected to the mounting frame 100 by screws. In other embodiments, the clamp 700 may also comprise a rubber ring 720 sleeved outside the first column segment 310. Two half-rings 710 are enclosed outside the rubber ring 720.

FIG. 12 is a schematic structural diagram of a medium storage system according to other embodiments of the invention. In some embodiments, as shown in FIG. 12, a common rail device 400 is, in a posture in which it is vertical to an axial direction of a storage container 200, disposed in a mounting cavity 110. The mounting frame 100 is provided with a bracket 140 connected to the common rail device 400, to support the common rail device 400. The mounting frame 100 can provide a buffer for the common rail device 400 when a vehicle collides, thereby improving a safety performance. The mounting frame 100 is provided with two parallel crossbeams, one of which is used for connecting to the connector 300 and/or installing a fixing device of the connector 300. Two ends of the bracket 140 are connected to the two crossbeams, respectively.

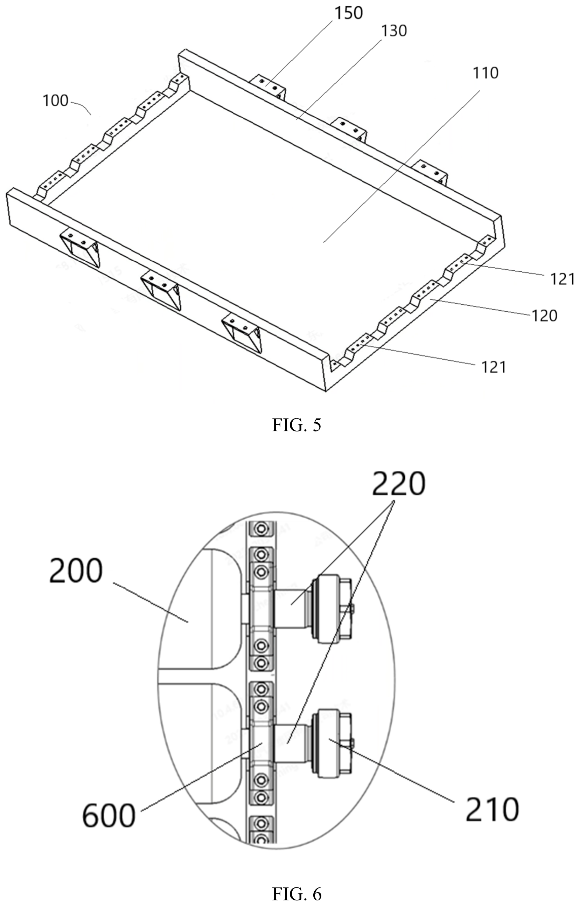

In other embodiments, the common rail device 400 may also be located outside the mounting cavity 110 of the mounting frame 100, but a safety is not as good as that of the common rail device 400 being located in the mounting cavity 110. The invention does not limit a position of the common rail device 400. In some embodiments, as shown in FIG. 5, the mounting frame 100 may comprise two or more longitudinal beams 130 and two or more crossbeams 120. The two or more longitudinal beams 130 and the two or more crossbeams 120 enclose a rectangular mounting cavity 110. The crossbeam 120 and the longitudinal beam 130 are vertical to each other. The crossbeam 120 is vertical to an axial direction of the storage container 200. The longitudinal beam 130 is vertical to an axial direction of the rail 410. At least two longitudinal beams 130 are provided with mounting seats thereon for connecting vehicles. The connectors 300 each are connected to the crossbeams 120. In other embodiments, the mounting cavity 110 enclosed by two or more longitudinal beams 130 and two or more crossbeams 120 may also be a parallelogram. One of angles between the crossbeams 120 and the longitudinal beams 130 is an acute angle and another of angles between the crossbeams 120 and the longitudinal beams 130 is an obtuse angle. The crossbeam 120 forms an angle with an axial direction of the storage container 200. The longitudinal beam 130 forms an angle with an axial direction of the rail 410. In some embodiments, the bracket 140 may be connected to the crossbeam 120, and the bracket 140 may also be connected to the longitudinal beam 130. In other embodiments, the mounting frame 100 also comprises a mounting bracket 150 for connecting to a vehicle body. The mounting frame 100 is fixed to the vehicle body by the mounting bracket 150.

FIG. 5 is a schematic structural diagram of a mounting frame in the medium storage system of FIG. 1. In some embodiments, as shown in FIG. 5, the crossbeam 120 is provided with two or more protrusion portions 121 distributed at an interval. The connector 300 is located on the protrusion portion 121 and connected to the protrusion portion 121, or the connector 300 is partially embedded in the interval and connected to the protrusion portion 121, to achieve a connection between the connector 300 and the mounting frame 100, thereby achieving a fixation of the storage container 200. In some embodiments, the connector 300 may be provided with two lugs for connecting to the protrusion portion 121. When the connector 300 is located on the protrusion portion 121 and connected to the protrusion portion 121, the number of the protrusion portions 121 is the same as the number of the connectors 300. The two lugs and corresponding protrusion portions 121 are connected by screws. In other embodiments, when the connector 300 is partially embedded in the interval and connected to the protrusion portion 121, the number of the intervals is the same as the number of the connectors 300. The two lugs of the connector 300 can be connected to two adjacent protrusion portions 121, respectively, that is, the connector 300 is partially embedded into the interval, i.e., a groove, to achieve a connection between the connector 300 and the mounting frame 100, and to limit a position of the connector 300 along an axial direction of the crossbeam 120. In other embodiments, the connector 300 and the lug can be an integrated structure. In some embodiments, the lug can be located at the first column segment 310.

FIG. 6 is an installation structural diagram of a tail valve in the medium storage system of FIG. 1. In some embodiments, as shown in FIGS. 1 and 6, at least one storage container 200 is provided with a tail valve 210. The tail valve 210 is integrated with a temperature-driven safety pressure-relief device. The temperature-driven safety-pressure-relief device is turned on when a temperature of a medium in the storage container 200 reaches a set temperature, to make the medium in the storage container 200 to be discharged to an outside. When an accident such as combustion etc., occurs around the medium storage system, a pressure of the medium in the storage container 200 increases, and an explosion risk may be caused. At this time, when the temperature rises to the set temperature, the safety pressure relief device can be automatically turned on to discharge the medium through the tail valve 210, thereby improving a safety performance.

For a medium in a storage container 200 without the tail valve 210, a discharge path is as follows: the storage container 200 without the tail valve 210, a corresponding connector 300, a medium channel 411 of a rail 410, the connector 300 corresponding to the storage container 200 with the tail valve 210, the storage container 200 with the tail valve 210, and the tail valve 210. A cost is low, but a response time is slightly longer. In order to balance the response time and cost, in other embodiments, it is possible to select that some storage containers 200 may be provided with tail valves 210, for example, a tail valve 210 is provided for every other storage container 200, or a tail valve 210 is provided for every two storage containers 200. Of course, other options are also possible, which is not limited by the invention. In other embodiments, each storage container 200 is provided with a tail valve 210, and thus a response time is shortest.

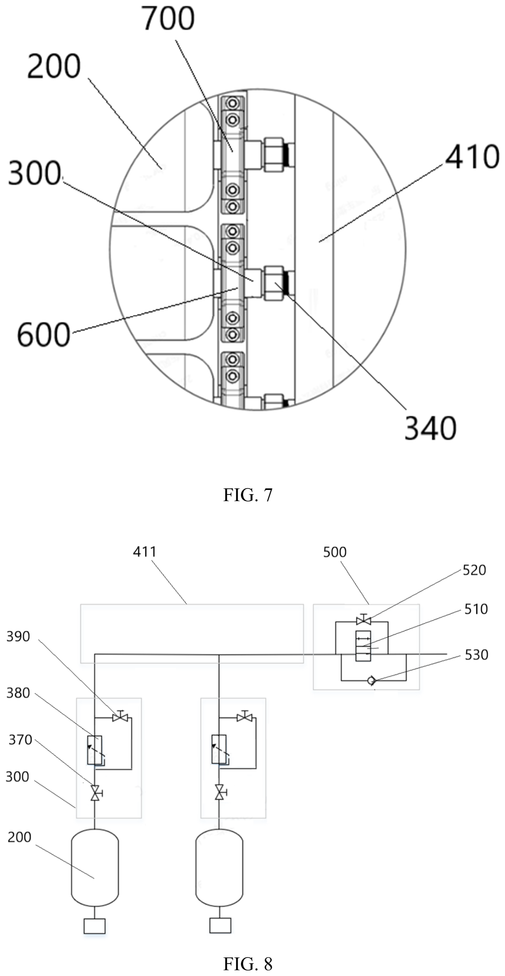

FIG. 7 is a connection structural diagram of a connector, a storage container, and a common rail device in the medium storage system of FIG. 1. As shown in FIGs. 1 and 7, in some embodiments, the connector 300 is disposed at an end of the storage container 200 along an axial direction. As shown in FIG. 6, another end of the storage container 200 is provided with a throat pipe 220 along the axial direction. The medium storage system may also comprise four or more fixing devices 600. The connector 300 and the throat pipe 220 each are installed on the mounting frame 100 by corresponding fixing devices 600, thereby achieving a fixation of the storage container 200 by a structure outside a body of the storage container 200, to realize a connection between the storage container 200 and the mounting frame 100. A deformation caused by a thermal expansion and contraction of the storage container 200 itself is also not limited, to improve a service life of the storage container 200. One storage container 200 is correspondingly provided with two fixing devices 600. The two fixing devices 600 are connected to the connector 300 and the throat pipe 220, respectively. When an acceleration or deceleration of the vehicle body occurs along an axial direction of the storage container 200, the storage container 200 can be limited in the axial direction to improve an installation stability of the storage container 200. The fixing device 600 can adopt a structure of the aforementioned clamp 700, or can adopt other brackets with fixing functions. It is not specifically limited in the invention.

In some embodiments, the tail valve 210 is connected to a throat pipe 220 of a corresponding storage container 200, and is in communication with the storage container 200 through the throat pipe 220, to make the medium in the storage container 200 to be discharged through the throat pipe 220 and the tail valve 210 in turn. When a set temperature is reached, the temperature-driven safety-pressure-relief device opens the tail valve 210 to improve a safety performance. In the storage container 200 without a tail valve 210, the throat pipe 220 may be blocked by a blocking member. The throat pipe 220 of the storage container 200 without a tail valve 210 plays a role of connecting and fixing. The storage container 200 comprises a body and a throat pipe 220. The body is provided with an inner cavity. The throat pipe 220 is in communication with the inner cavity of the body. The body and the throat pipe 220 can adopt a split structure, or an integrated structure with a better sealing performance.

FIG. 8 is a schematic structural diagram of a control valve in the medium storage system of FIG. 1. In some embodiments, as shown in FIGs. 2 and 8, the communication channel may comprise a first channel 351, a second channel 352 in communication with the first channel 351, and a first bypass channel 353 in parallel communication with the second channel 352. The first channel 351 is in communication with the inner cavity of the storage container 200. The second channel 352 is in communication with the medium channel 411 of the rail 410. The connector 300 is provided with a shut-off valve 370 in communication with the first channel 351, an overflow valve 380 in communication with the second channel 352, and a first bypass valve 390 in communication with the first bypass channel 353. The shut-off valve 370 is generally in a normally open state during a process of supplying and injecting a medium. Of course, the first channel 351 can also be opened and closed according to a demand of medium supply, to realize an entry of the medium into the medium channel 411 from the inner cavity of the storage container 200 through the first channel 351 and the second channel 352, or an entry of the medium into the inner cavity of the storage container 200 from the medium channel 411 through the second channel 352 and the first channel 351. With the shut-off valve 370 disposed, an individual control of the storage container 200 can be realized, and different storage containers 200 do not affect one another.

When a flow rate of the medium in the medium channel 411 of the rail 410 increases abnormally, the overflow valve 380 can reduce an opening of the second channel 352 to reduce the flow rate of the medium entering the medium channel 411 from the first channel 351, and gradually restore the opening of the second channel 352 to a normal opening when the medium in the medium channel returns to a normal flow rate. During a process of supplying and injecting the medium, the first bypass valve 390 is in a normally closed state. When the overflow valve 380 fails, the medium cannot pass through the second channel 352, or a flow rate of the medium passing through the second channel 352 is too small, the first bypass valve 390 can be opened, to make the medium in the storage container 200 to pass through the first channel 351 and the first bypass channel 353 in turn, to enter the medium channel 411 of the rail 410 to supply the medium.

When the storage container 200 provided with the tail valve 210 is exhausted and depressurized through the tail valve 210, an internal pressure of the storage container 200 depressurized is rapidly reduced. Since various storage containers each 200 are in communication with the common rail device 400, for some storage containers 200 without the tail valve 210, the storage container 200 depressurized can be regarded as a downstream of the connector 300 to which the storage container 200 without the tail valve 210 is connected. In such condition, the overflow valve 380 of the connector 300 that is connected to the storage container 200 without the tail valve 210 may be activated by mistake, resulting in a significant decrease in a flow rate of the communication channel of the connector 300, affecting a normal medium supply or pressure relief to an outside of the storage container 200 without the tail valve 210. In order to reduce a probability of the overflow valve 380 being activated by mistake, in some embodiments, each storage container 200 is provided with a tail valve 210 to ensure that the overflow valve 380 is activated only when a medium leak occurs downstream, and each storage container 200 is provided with a tail valve 210 to shorten a response time of exhaust and depressurization.

In some embodiments, as shown in FIG. 2, the first channel 351 is parallel to the second channel 352; the shut-off valve 370 is a manual valve. The shut-off valve 370 is, in a posture in which it is disposed at an angled to an axial direction of the connector 300, located at a communication position 354 between the first channel 351 and the second channel 352. With the communication position 354 disposed, the first channel 351 is parallel to the second channel 352 to make the shut-off valve 370 to be disposed at an angle to the axial direction of the connector 300, to facilitate a provision of an operating space for the shut-off valve 370. The angle between the shut-off valve 370 and the axial direction of the connector 300 can be determined according to the operating space. In other embodiments, the shut-off valve 370 and the axial direction of the connector 300 are perpendicular to each other. At this time, an axial direction of the communication position 354 is perpendicular to the axial direction of the connector 300, to make an operation on the shut-off valve 370 more easier. The shut-off valve 370 and the first bypass valve 390 can both be manual valves, which are safer than electrically controlled valves.

In some embodiments, the shut-off valve 370 and the first bypass valve 390 are sequentially located at the first column segment 310 of the connector 300 along a direction from the first column segment 310 to the second column segment 320. When the first column segment 310 is connected to the mounting frame 100 by a lug, the lug can be located between the shut-off valve 370 and the first bypass valve 390, and the lug may also be located at a side of the shut-off valve 370 close to the storage container 200. When the first column segment 310 is connected to the mounting frame 100 by the fixing device 600, the fixing device 600 may be connected to the first column segment 310 between the shut-off valve 370 and the first bypass valve 390, and may also be connected to a side of the shut-off valve 370 close to the storage container 200.

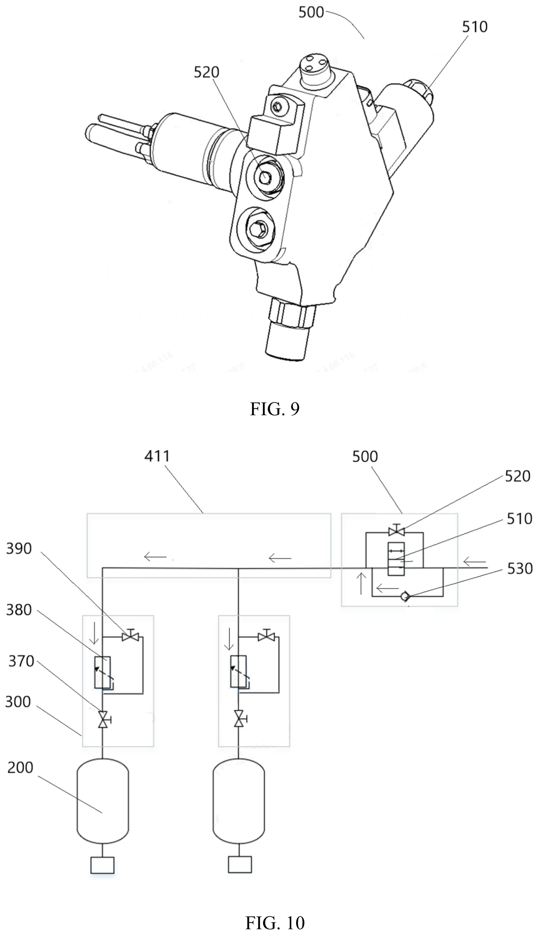

FIG. 9 is a medium circulation circuit diagram of the medium storage system in FIG. 1. In some embodiments, as shown in FIGs. 8 and 9, the control valve 500 is an integrated solenoid valve, and may comprise a valve block, and a one-way valve 530, a switch valve 510 and a second bypass valve 520 that are disposed on the valve block. A filling flow channel, a main flow channel and a second bypass flow channel that is in communication with the main flow channel are provided inside the valve block. The filling flow channel and the second bypass flow channel each are in parallel communication with the main flow channel. An end of the filling flow channel, an end of the main flow channel and an end of the second bypass flow channel each are in communication with the medium channel 411, and another end of the filling flow channel, another end of the main flow channel and another end of the second bypass flow channel each are in communication with an external medium source. The one-way valve 530 is disposed on the filling flow channel. The switch valve 510 is disposed on the main flow channel. The second bypass valve 520 is disposed on the second bypass flow channel. A function of the control valve 500 is similar to that of a cylinder valve. The one-way valve 530 allows a medium to enter the medium channel 411 of the rail 410 from the external medium source through the filling flow channel to realize a gas injection of the storage container 200, and does not allow the medium in the storage container 200 to be discharged from the filling flow channel. The switch valve 510 can control an opening and closing of the main flow channel to supply medium to an outside or not to supply medium to the outside. The second bypass valve 520 can control an opening and closing of the second bypass flow channel. When the switch valve 510 is damaged, the second bypass valve 520 can be opened to supply the medium to the outside through the second bypass flow channel.

In some embodiments, the switch valve 510 is an electrically controlled switch valve 510. The second bypass valve 520 is a manually-operated normally-closed bypass valve or an electrically-controlled normally-closed bypass valve. The medium storage system may further comprise a controller. The controller is electrically connected to the electrically controlled switch valve 510. The controller sends a reminder signal when the electrically controlled switch valve 510 is damaged, and then the second bypass valve 520 is manually opened to supply the medium to the outside; or the controller is electrically connected to both the electrically controlled switch valve 510 and the electrically-controlled normally-closed bypass valve, and the controller controls the electrically-controlled normally-closed bypass valve to open when the electrically controlled switch valve 510 is damaged, that is, the second bypass valve 520 is automatically opened to supply the medium to the outside.

In the following the storage container 200 being a hydrogen storage container and the medium being hydrogen are taken as an example, a process of hydrogen refueling and hydrogen supply of the medium storage system is further described.

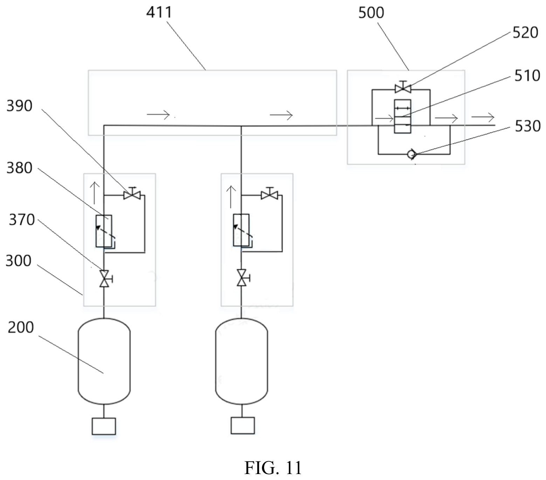

FIG. 10 is a hydrogen circulation circuit diagram of a medium storage system in a hydrogen refueling state according to some embodiments of the invention. As shown in FIG. 10, when a hydrogen is required to be added into the hydrogen storage container, a first bypass valve 390 of a connector 300 is in a closed state, a shut-off valve 370 being in an open state, an one-way valve 530 of a control valve 500 being in an open state, a switch valve 510 and a second bypass valve 520 being both in a closed state. A hydrogen enters the control valve 500 and passes through a filling flow channel, a medium channel 411 of a rail 410, a second channel 352 and a first channel 351 of the connector 300 into the hydrogen storage container; after an hydrogen injection is completed, an external hydrogen gas source is cut off. FIG. 11 is a hydrogen circulation circuit diagram of a medium storage system in a hydrogen supply state according to some embodiments of the invention. As shown in FIG. 11, when hydrogen is required to be supplied to an outside, a first bypass valve 390 of a connector 300 is in a closed state, a shut-off valve 370 being in an open state, a switch valve 510 of a control valve 500 being opened, and a second bypass valve 520 being in a closed state. A hydrogen passes in sequence, from an inside of the hydrogen storage container, through a first channel 351 and a second channel 352 of the connector 300, a medium channel 411 of a rail 410 and a main flow channel of the control valve 500, to be supplied to a gas-using structure.

According to a second aspect of the invention, a vehicle is provided, comprising a vehicle body, a power system and the medium storage system of the first aspect. The power system is configured to do work using a medium, to provide a driving force for a movement of the vehicle body. The medium storage system is in communication with the power system to provide the medium.

In some embodiments, a mounting bracket 150 of the medium storage system is connected to the vehicle body. An axial direction of a storage container 200 can be extended along a length direction of the vehicle body or can also be extended along a width direction of the vehicle body, which is not limited by the invention. When the axial direction of the storage container 200 is extended along the length direction of the vehicle body, a connection between the storage container 200 and a mounting frame 100 through a connector 300 can form an axial direction limit when a vehicle during driving accelerates, decelerates, starts or stops, to improve a stability of the storage container 200, and to be capable of being adapted to a volume change of the storage container 200 caused due to a thermal expansion and contraction.

In some embodiments, when the vehicle is a passenger car, the crossbeam 120 is along a width direction of a vehicle body; the longitudinal beam 130 is along a length direction of the vehicle body; and an axial direction of the storage container 200 is along the length direction of the vehicle body. When the vehicle is hit head-on, a front cabin and a trunk can buffer to reduce a damage to the storage container 200. When the vehicle is hit sideways, the longitudinal beam can buffer a damage to the rail 410. When a dimension of the medium storage system is close to or the same as a dimension of a power battery of an electric vehicle, the medium storage system can directly replace the power battery to be installed to a vehicle body, without new designs and modifications to the vehicle body of the electric vehicle, thereby improving a versatility of the medium storage system. In other embodiments, the crossbeam 120 is along the length direction of the vehicle body. The longitudinal beam 130 is along the width direction of the vehicle body. The axial direction of the storage container 200 is along the width direction of the vehicle body. In other embodiments, the crossbeam 120 has an angle with both the length direction and width direction of the vehicle body.

In some embodiments, the power system is a hydrogen fuel cell, and the medium storage system is a hydrogen storage system.

According to some technical solutions of the invention, the invention has at least the following beneficial effects or advantages:
1)A single control valve 500 realizes a medium filling control and supply control of multiple storage containers 200. Therefore, the number of valves is small. A cost of a system is reduced. No pipeline is required inside the system. A space utilization is high and an integration is high.
2)The plurality of storage containers 200 are arranged in sequence along a direction that is at an angle to the axial direction of the storage container 200, and the common rail device 400 is disposed at an angle to the axial direction of the storage container 200, and thus the medium storage system has a high integration along the axial direction of the storage container 200 and a more compact structural dimension.
3)The storage container 200 is installed and fixed by the connector 300. It is not required to dispose a conventional fixing device 600 such as a clamp 700 and the like on the storage container 200, and the storage container 200 can be limited in the axial direction. Therefore, the volume change of the storage container 200 caused by the thermal expansion and contraction can be adapted. A replacement of the storage container 200 is convenient.
4)In addition to the basic functions of medium filling, medium storage and medium supply, system safety functions, such as emergency response for overcurrent, overtemperature and the like, are complete.
5) The connector 300 adopts a variable diameter structure to improve a deformation capacity of a part with a smaller cross-sectional area, to be adapted to deformation requirements of hanging during installation and not easy to be brittle fracture.

According to some technical solutions of the invention, the medium storage system is a vehicle-mounted storage system, and as a whole comprises a mounting frame, a storage container, a connector, a common rail device, and a control valve. The mounting frame is used to connect the vehicles. A plurality of storage containers are all located in a mounting cavity of the mounting frame and sequentially arranged along a direction that is at an angle to an axial direction of the storage container, and thus the vehicle-mounted storage system is formed as an independent module. Each storage container is provided with a connector thereon. The connector simultaneously serves functions of allowing a medium to enter and exit the storage container, as well as an installation of the storage container. Various storage containers each are in communication with the common rail device. The medium is filled into various storage containers via the common rail device. The medium in various storage containers, when in use, flows into the common rail device. The control valve is provided on the common rail device to uniformly control a circulation condition of the medium in various storage containers.

In the invention, unless otherwise clearly specified and limited, the first feature being "above" or "below" the second feature may comprise the first and second features being in direct contact, or the first and second features being in contact not directly but through another feature therebetween. Moreover, the first feature being "above", "over" and "on" the second feature comprises the first feature being directly above and obliquely above the second feature, or simply indicates that the first feature is higher in level than the second feature. The first feature being "below", "under" and "beneath" the second feature comprises the first feature being directly below and obliquely below the second feature, or simply indicates that the first feature is lower in level than the second feature.

In the description of the invention, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise" indicate the orientation or position relationship based on the orientation or position relationship shown in the drawings, which is only for the convenience of describing the invention and simplifying the description, rather than indicating or implying that the device or element referred to must have a specific orientation, be constructed and operated in a specific orientation, and therefore cannot be understood as a limitation of the invention.

It should be noted that all directional indications in the embodiments of the invention are only used to explain the relative position relationship, movement status, etc. between the components in a certain specific posture. If the specific posture changes, the directional indication will also change accordingly.

In the invention, unless otherwise clearly specified and limited, the terms "connection", "fixed" and the like should be understood in a broad sense. For example, "fixed" can be a fixed connection, a detachable connection, or an integral connection, and can be a mechanical connection or an electrical connection. It can be directly connected or indirectly connected by an intermediate medium, and can be the internal connection of two elements or the interaction relationship between two elements, unless otherwise clearly defined. For those skilled in the art, the specific meanings of the above-mentioned terms in the invention can be understood according to the specific circumstances.

In addition, in the invention, the descriptions such as "first", "second", etc., are only used for descriptive purposes and cannot be understood as indicating or implying their relative importance or implicitly indicating the number of technical features indicated. Thus, the features defined as "first" and "second" may explicitly or implicitly comprise one or more features. In the description of the invention, the meaning of "a plurality of" is two or more, unless otherwise clearly and specifically defined.

In the description of this specification, the description of the reference terms "one embodiment", "some embodiments", "examples", "specific examples", or "some examples" means that the specific features, structures, materials or characteristics described in combination with the embodiment or example are comprised in at least one embodiment or example of the invention. In this specification, the schematic representation of the above-mentioned terms does not necessarily refer to the same embodiment or example. Moreover, the specific features, structures, materials or characteristics described can be combined in any one or more embodiments or examples in a suitable manner. In addition, those skilled in the art can combine and integrate different embodiments or examples described in this specification.

In addition, the technical solutions among various embodiments can be combined with one another, but it must be based on that it can be implemented by those skilled in the art. When the combination of technical solutions is contradictory or cannot be implemented, it should be considered that such a combination of technical solutions does not exist and is not within the scope of protection sought by the invention.

Although the embodiments of the invention have been shown and described, those skilled in the art can understand that various changes, modifications, substitutions and variations can be made to these embodiments without departing from the principles and purpose of the invention, and the scope of the invention is defined by the claims and equivalents thereof.

## Claims

1. A medium storage system installed on a vehicle, comprising:
a mounting frame configured to connect a vehicle and comprising a mounting cavity;
two or more storage containers disposed in the mounting cavity and arranged along a direction that is at an angle to an axial direction of the storage container in sequence;
two or more connectors connected to corresponding storage containers, each connector being connected to the mounting frame, and provided with a communication channel;
a common rail device, connected to the mounting frame and/or the vehicle and disposed at an angle to the axial direction of the storage container, wherein the common rail device is provided with a medium channel, inner cavities of various storage containers each being in communication with the medium channel through the communication channel of a corresponding connector; and
a control valve communicated onto the common rail device.

2. The medium storage system according to claim 1, wherein the connector is a variable diameter cylinder, wherein the variable diameter cylinder comprises a first column segment, a second column segment, and a connecting segment which are sequentially connected in a direction from the storage container to the common rail device, the first column segment being connected to a corresponding storage container, a cross-sectional area of the second column segment being smaller than a cross-sectional area of the first column segment, the connecting segment being connected to the common rail device.

3. The medium storage system according to claim 2, wherein the connectors further comprises a nut that is movably sleeved onto the connecting segment; the common rail device comprises a rail provided with the medium channel and two or more threaded joints connected to the rail, the nut being connected to the threaded joint.

4. The medium storage system according to claim 3, wherein an end of the connecting segment close to the common rail device is provided with a mating slope, the connecting segment being partially extended into the threaded joint.

5. The medium storage system according to claim 2, wherein the connector is coaxially disposed at an end of the storage container along the axial direction; the medium storage system further comprises two or more clamps connected to the mounting frame, the clamp being sleeved on the first column segment.

6. The medium storage system according to any one of claims 1 to 5, wherein the common rail device is disposed in the mounting cavity in a posture in which it is vertical to the axial direction of the storage container, the mounting frame being provided with a bracket connected to the common rail device.

7. The medium storage system according to any one of claims 1 to 5, wherein the mounting frame comprises two or more longitudinal beams and two or more crossbeams, the two or more longitudinal beams and the two or more crossbeams enclosing a rectangular mounting cavity; at least two of the longitudinal beams are provided with mounting seats thereon for connecting the vehicle, the connectors each being connected to the crossbeams.

8. The medium storage system according to claim 7, wherein the crossbeam is provided with two or more protrusion portions distributed at an interval; the connector is located on the protrusion portion and connected to the protrusion portion, or the connector is partially embedded into the interval and connected to the protrusion portion.

9. The medium storage system according to any one of claims 1 to 5, wherein at least one storage container is provided with a tail valve, the tail valve being integrated with a temperature-driven safety pressure-relief device, the temperature-driven safety pressure-relief device being turned on when a temperature of a medium in the storage container reaches a set temperature to discharge the medium in the storage container to an outside.

10. The medium storage system according to any one of claims 1 to 5, wherein the connector is disposed at an end of the storage container along the axial direction, another end of the storage container along the axial direction being provided with a throat pipe; the medium storage system further comprises four or more fixing devices; and the connector and the throat pipe each are installed on the mounting frame by corresponding fixing devices.

11. The medium storage system according to any one of claims 1 to 5, wherein the communication channel comprises a first channel, a second channel that is in communication with the first channel, and a first bypass channel that is in parallel communication with the second channel; the connector is provided with a shut-off valve that is in communication with the first channel, an overflow valve that is in communication with the second channel, and a first bypass valve that is in communication with the first bypass channel.

12. The medium storage system according to claim 11, wherein the first channel is parallel to the second channel; the shut-off valve is a manual valve, and is, in a posture in which it is disposed at an angled to an axial direction of the connector, located at a communication position between the first channel and the second channel.

13. The medium storage system according to claim 11, wherein the control valve is an integrated solenoid valve, and comprises a valve block, and a one-way valve, a switch valve and a second bypass valve that are disposed on the valve block; a main flow channel, a filling flow channel and a second bypass flow channel that are in parallel communication with the main flow channel are provided inside the valve block; the one-way valve is disposed on the filling flow channel, the switch valve being disposed on the main flow channel, the second bypass valve being disposed on the second bypass flow channel.

14. The medium storage system according to claim 13, wherein the switch valve is an electrically controlled switch valve, the second bypass valve being a manually-operated normally-closed bypass valve or an electrically-controlled normally-closed bypass valve, the medium storage system further comprising a controller; and
wherein the controller is electrically connected to the electrically controlled switch valve; the controller sends a reminder signal when the electrically controlled switch valve is damaged, or the controller is electrically connected to both the electrically controlled switch valve and the electrically-controlled normally-closed bypass valve; and the controller controls the electrically-controlled normally-closed bypass valve to open when the electrically controlled switch valve is damaged.

15. A vehicle, comprising:
a vehicle body;
a power system, configured to do work using a medium, to provide a driving force for a movement of the vehicle body; and
the medium storage system according to any one of claims 1 to 14, being in communication with the power system to provide the medium.

16. The vehicle according to claim 15, wherein the power system is a hydrogen fuel cell.
